# EUROPEAN PATENT SPECIFICATION

(11) **EP 0 752 212 B1**
(45) Date of publication and mention of the grant of the patent: **26.05.2004**
(21) Application number: 96304852.5
(22) Date of filing: 01.07.1996
(51) Int. Cl.: A23J 3/16, A23L 1/305

(54) **Process for preparing fractionated soybean proteins and foods using the same**
Verfahren zur Herstellung von fraktionierten Sojaproteinen und Verwendung derselben in Nahrungsmitteln
Procédé pour la fabrication de protéines de soja fractionnées et aliments les comprenant

(30) Priority: 07.07.1995 JP 19602095
(43) Date of publication of application: 08.01.1997
(73) Proprietor: FUJI OIL COMPANY, LIMITED, Osaka-shi, Osaka-fu 542 (JP)
(72) Inventor: Samoto, Masahiko, Tsukuba-gun, Ibaraki-ken (JP); Akasaka, Takeshi, Tsukuba-gun, Ibaraki-ken (JP); Miyazaki, Chiaki, Toride-shi, Ibaraki-ken (JP)
(74) Representative: Hayes, Adrian Chetwynd

(56) References cited:
- EP-A- 0 072 094
- EP-A- 0 666 034
- DATABASE WPI Section Ch, Week 9706 Derwent Publications Ltd., London, GB; Class D13, AN 97-059635 XP002064629 & JP 08 308 506 A (ALLERGEN FREE TECHNOLOGY KENKYUSHO KK)
- MASAHIKO SAMOTO ET AL: "SIMPLE AND EFFICIENT PROCEDURE FOR REMOVING THE 34 KDA ALLERGENIC SOYBEAN PROTEIN, GLY M I, FROM DEFATTED SOY MILK" BIOSCIENCE BIOTECHNOLOGY BIOCHEMISTRY, vol. 58, no. 11, 1 November 1994, pages 2123-2125, XP000486158
- R.L. ANDERSON ET AL.: "Extraction of soybean meal proteins with salt solutions at pH 4.5" JOURNAL OF AGRICULTURAL AND FOOD CHEMISTRY, vol. 21, no. 2, 1973, WASHINGTON US, pages 251-254, XP002064628

## Description

The present invention relates to a process for preparing fractionated soybean proteins which are low-allergenic proteins and have improved color tone (e.g., brightness and clarity), flavor, taste and gel strength. The present invention also relates to low-allergenic foods containing the proteins.

Recently, the number of allergic patients such as patients with atopic dermatitis has increased. In foods, proteins contained in egg white, soybean and milk are recognized as the three main allergens. As a result, a so-called elimination diet has been introduced as a symptomatic treatment. However, of the above allergens, soybean proteins are present extensively in traditional Japanese foods such as tofu (soybean curd), aburaage (fried tofu), koridofu (freeze-dried tofu) and yuba (membrane-like soybean protein food) as well as in other foods which contain soybean proteins as a part of their raw materials. Moreover, recently variations of foods utilizing functional properties of soybean proteins, such as emulsification, gel-formation, film-formation, water-retention, viscosity and foaming have increased, which makes selection of the elimination diet more difficult.

Ogawa et al. (Biosci. Biotech. Biochem., 57:1030 (1993)) have identified a soybean protein component having a high reactivity to IgE antibody from a patient who was atopic to soybean as Gly m Bd 30k (this is contained in a fraction showing a 34 kDa band in SDS-PAGE electrophoresis and the authors have re-named this as "Gly m I"; hereinafter this will be referred to as "Gly m I" or "allergenic protein"). In addition, the authors also found that the 7S fraction contains a large amount of this allergenic protein, while the 11S fraction and whey fraction fractionated by the method of Than and Shinasaki (J. Agric. Food Chem., 24:1117-1121) 1976)) scarcely contains it (Biosci. Biotech. Biochem., Vol. 57, page 1030 (1993)).

However, it is very difficult to separate and remove the Gly m I component from the 7S fraction by known methods on an industrial scale. On the other hand, even when proteins are collected only from the 115 fraction and whey fraction, the sum of them amounts to only 30 to 40% (25 to 30% from the 11S fraction alone) of the whole of soybean milk proteins. Thus, there is a problem that the yield of low-allergenic soybean proteins is low. Moreover, there is also a problem in productivity in that a delicate pH adjustment of soybean milk and a long-term treatment at a low temperature are needed in fractionation of the 7S fraction and the 11S fraction, or a problem that the functional properties of soybean proteins are substantially changed when 7S protein is absent.

EP-A-0666034 which is comprised in the state of the art by virtue of Article 54(3)(4) EPC describes a process for preparing fractionated soybean proteins in which the use of a salt is essential, in the case of a salt which can be dissolved at pH 2.0 to 4.0, the concentration is 3mM or higher in the case of a salt having a polyvalent acidic radical, or 600 mM or higher in the case of a chloride.

Masahiko Samoto *et al*: "Simple and Efficient Procedure for removing the 34 KDA Allergenic Soybean Protein, GLY M1, from Defatted Soy Milk" Bioscience Biotechnology Biochemistry, vol 58. No.11, 1 November 1994, pages 2123-2125, XP000486158 describes the removal of Gly ml allergenic soybean protein from soy milk by treating with 1M Na₂SO₄, acidifying to pH 4.5 and centrifugation. EP-A-0072094 also relates to the fractionisation of 7S and 11S protein from soybean proteins and teaches that the extraction pH is most appropriately in the range pH 6.0 to 10.0. Neither of these references teaches the use of sulfuric acid, acetic acid or citric acid.

As a result of intensive study by the inventors of the present patent application, it has been found that the 7S fraction from which the allergenic protein has been separated can be readily obtained by treatment with an aqueous solution of a specific acid in a specific pH range. It has been also found that, when the aqueous solution further contains an alkaline earth metal salt, the allergic protein is separated so as to give fractionated soybean proteins which are rich in not only the 7S fraction but also the 11S fraction. In addition, it has been further found that a soybean protein containing a reduced amount of Gly m I thus obtained has improved color, flavor, taste and gel strength in comparison with conventional soybean proteins and therefore wide use which is not limited to soybean protein allergic patients is envisaged.

The main object of the present invention is to produce low-allergenic soybean proteins which have good flavor and color by an efficient and simple process and in improved yield.

This object as well as other objects and advantages of the present invention will become apparent to those skilled in the art from the following description with reference to the accompanying drawing.

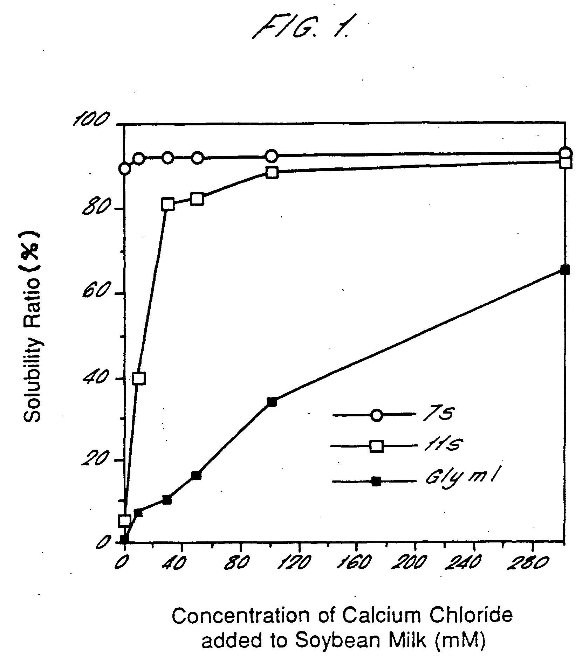

In the drawing, Fig. 1 is a graph illustrating the solubility ratios of three proteins, 7S, 11S and Gly m I, at various concentrations of calcium chloride.

According to the present invention, for Contracting States ES and IT there is provided a process for preparing fractionated soybean proteins which comprises treating soybean proteins with an aqueous solution of pH 4 or less which contains an acid selected from the group consisting of sulphuric acid, acetic acid and citric acid and, optionally, 0 to 200 mM of a chloride or a hydroxide of an alkaline earth metal to form a precipitation fraction, removing the precipitation fraction and collecting a supernatant fraction.

According to the present invention, for Contracting States BE, DE, FR, GB and NL there is provides a process for preparing fractionated soybean proteins which comprises treating soybean proteins with an aqueous solution at pH of not higher than 4 which contains an acid selected from the group consisting of sulphuric acid, acetic acid and citric acid and, optionally, not more than 10 mM of a chloride or hydroxide of an alkaline earth metal to form a precipitation fraction, removing the precipitation fraction containing 11S protein and allergenic protein and collecting a supernatant fraction containing 7S protein.

The present invention also provides foods comprising a soybean component which is the fractionated soybean protein obtained by the process of the present invention.

For Contracting States BE, DE, FR, GB and NL there is also provided the use of a process as defined above for removing 7S protein from allergenic protein and 11S protein.

The treatment with the aqueous solution of pH 4 or less in the present invention may be any treatment where the soybean proteins are exposed to an aqueous solution. In a preferred embodiment, the treatment is such that a precipitation fraction is obtained from an aqueous extract of soybean proteins, or a soluble fraction is separated from soybean proteins precipitated with an acid. However, when the pH is too low, proteins are liable to be denatured and sometimes hardly used for the production of the desired products. Therefore, in general, preferably, the pH is not lower than 2.

If the treatment is not carried out with "an aqueous solution at pH 4 or less", separation hardly takes place even under high gravity and a large amount of the allergenic protein remains in the supernatant, even if a small amount of a precipitation fraction is formed. In general, when the treatment is carried out under acidic conditions higher than pH 5, selective precipitation of the allergenic protein is not effectively improved.

As the acid to be used, it is necessary that the aqueous solution contains at least one acid selected from the group consisting of sulfuric acid, acetic acid and citric acid. However, all of the acids to be used for adjusting the solution to an acidic pH of 4 or less are not necessarily these specific acids but one or more other acids can also be used. That is, it is sufficient that at least the majority of all the acids contained in the aqueous solution is constituted by the above specific acids. If the amount of the above specific acids is insufficient, separation between the 7S protein and the allergenic protein is insufficient.

In addition, the yield of 11S protein in the fractionated soybean proteins can be controlled by means of the concentration of a chloride or hydroxide of an alkaline earth metal contained in the aqueous solution of pH 4 or less. That is, when the alkaline earth metal chloride or hydroxide is not contained in the aqueous solution or the concentration thereof is not higher than 10 mM, 7S protein from which the allergenic protein and 11S protein has been removed can be readily obtained as the fractionated soybean protein. In addition, with increase in the concentration of the alkaline earth metal chloride or hydroxide, the amount of 11S protein in the fractionated soybean proteins is increased. However, separability between the allergenic protein and 11S protein is gradually reduced (see Fig. 1). Therefore, the concentration of the alkaline earth metal chloride or hydroxide should be not higher than 200 mM. In view of the yield of total remaining proteins and separability of the allergenic protein, the concentration of the chloride or hydroxide of the alkaline earth metal is preferably 10 to 100 mM. In particular, when the concentration is 20 to 60 mM, in comparison with the use of other acids and other salts, for example, hydrochloric acid and an alkali metal salt having a polyvalent acid radical such as sodium citrate, sodium tartrate or sodium sulfate, as much or more improvement in the reduction of the allergenic protein and increase in yield of remaining proteins can be obtained. Moreover, electrical conductivity of the solution can be reduced. This is advantageous with a view to workability such as by desalting.

As the alkaline earth metal chloride or hydroxide, for example, there can be mentioned chlorides and hydroxides of calcium and magnesium.

Examples of soybean proteins to be used as the raw material in the present invention include soybean milk extracted from soybeans or defatted soybeans, acid-precipitated soybean proteins prepared by adjusting the pH of such soybean milk to its isoelectric point and so-called isolated soybean proteins prepared by neutralizing acid-precipitated proteins.

Defatted soybean proteins with low heat history are useful to obtain the desired end proteins in high yield. In addition, when proteins from soybeans which are not stale are used, a high yield of the desired end proteins is readily and stably maintained.

However, even when denatured proteins with some heat history or protein raw material from so-called ,old-crop soybeans are used, the desired end proteins can be obtained in a high and stable yield by using a reducing agent such as salts, for example, NaHSO₃, cysteine, and other S-S bond cleaving agents, or by treating soybeans or soybean milk under electrically reducing conditions.

An aqueous extract of soybean proteins can be prepared as required, for example, by adding a salt to defatted soybean milk [a supernatant prepared by extracting fats and oils from milled soybeans with hexane, adding water to the residue, adjusting the pH of the mixture to neutral or a slight alkaline range if desired and removing "okara" (residue after separating soybean milk)]; by dissolving isolated soybean proteins which are water-soluble isolated soybean proteins in water and then adding a salt thereto; or by adding water and an alkali or acid to acid-precipitated soybean proteins to dissolve them and then adding a salt thereto. Alternatively, a salt can be firstly dissolved, followed by extraction. The pH of the aqueous extract is neutral or slightly alkaline, preferably pH 6.5 or more, more preferably pH 7.0 or more, or acidic such as pH 2.0 to 4.0, preferably pH 2.5 to 3.8. The solids content of the aqueous extract is selected from the range of about 1 to 20% by weight in an aqueous medium. The aqueous medium may be water containing the above salt and optionally an emulsifier.

The treatment of the present invention is conducted, for example, at 4 to 60°C for 20 minutes to 3 hours.

According to the present invention, the allergenic protein Gly m I can be selectively concentrated in a precipitation fraction obtained by the above treatment of the aqueous solution at pH of 4 or less. A supernatant fraction from which the precipitation fraction is separated is collected according to a conventional method such as centrifugation or filtration as a fraction containing soybean proteins or fractionated soybean proteins which are low-allergenic, or have excellent color, flavor, taste and/or gel formation ability. This fraction can be used as it is without any additional treatment as a raw material for processed soybean foods such as tofu (soybean curd), aburaage (fried tofu), koridofu (freeze-dried tofu), yuba (membrane-like soybean protein food), soybean milk, miso (fermented soybean paste), soy sauce and textured soybean protein foods.

Alternatively, according to a particular purpose, this fraction can be subjected to an additional treatment such as neutralization, desalting by, for example, electrical dialysis, heat sterilization, or drying, for example, freeze-drying, spray-drying, vacuum-drying or hot-air-drying. Optionally, after desalting (when a small amount of the salt is used, desalting is not needed) , adjusting the pH to about the isoelectric point and then removing whey, this fraction can be used for the production of soybean protein foods in a similar manner to so-called acid-precipitated soybean proteins and isolated soybean proteins, for example, the production of fibrous or membrane proteins or additives for meat, poultry and/or fish meat paste products. These foods are not only useful as low-allergenic foods or allergen-eliminated foods, but also are foods having bland flavor, taste and color tone.

The following Examples and Comparative Example further illustrate the present invention in detail. However, they are not to be construed to limit the scope of the present invention.

### Example 1

To defatted soybeans with less denaturation (1 kg) was added water (15 times) and the pH of the mixture was adjusted to 7.5 with addition of 1N NaOH. The mixture was stirred at room temperature for 3 hours to carry out extraction followed by removal of the "okara" component by centrifugation to obtain defatted soybean milk (hereinafter referred to as raw soybean milk).

Calcium chloride was added to the raw soybean milk in various concentrations as shown in Table 1 and dissolved with stirring. Then, the pH of each solution was adjusted with 2N H₂SO₄ to pH 2.8. The solution was centrifuged at 10,000 g for 10 minutes. The protein content of each supernatant fraction thus obtained was measured according to the Kjeldhal method and the solubility ratio was calculated by taking the total protein content of the raw soybean milk as 100%.

In addition, after diluting the supernatant fraction 3 times (provided that, when the concentration of CaCl₂ added is 50mM or more, a high dilution was employed so that isoelectrical precipitation was effected), its pH was adjusted to 4.5 with NaOH to cause isoelectrical precipitation. Whey proteins were removed by centrifugation and then the remaining proteins were subjected to SDS-electrophoresis to separate them into their respective constituent protein components. Regarding the three proteins, 7S, 11S and Gly m I, after CBB protein staining, peak areas were measured by densitometry. The solubility ratios of these three protein components were calculated by taking their peak areas obtained by subjecting all the proteins except whey protein in the raw soybean milk to SDS-electrophoresis as 100%, respectively. The solubility ratios of the respective constituent protein components are shown in both Fig. 1 and Table 1.

As seen from Table 1, the amount of the allergenic protein could be reduced to less than about 50%, when the addition concentration of calcium chloride was 0 to about 200 mM.

**Table 1**

| Protein Solubility Ratios | Raw Soybean Milk | Concentration of CaCl₂ Added (mM) | | | | | | |
|---|---|---|---|---|---|---|---|---|
| | | 0 | 10 | 30 | 50 | 100 | 300 | 1000 |
| Supernatant Protein (%) | 100 | 34 | 45 | 72 | 75 | 79 | 85 | 90 |

| SDS-electrophoresis | | | | | | | | |
|---|---|---|---|---|---|---|---|---|
| 7S (%) | 100 | 90 | 92 | 92 | 92 | 92 | 92 | 100 |
| | | | | | | | | |
| 11S (%) | 100 | 5 | 40 | 81 | 82 | 88 | 90 | 90 |
| | | | | | | | | |
| Gly m I (%) | 100 | 1 | 7 | 10 | 16 | 34 | 65 | 82 |

### Comparative Example 1

In the same manner as described in Example 1, solubility ratios were calculated except that sodium sulfate was used instead of calcium chloride and hydrochloric acid was used instead of sulfuric acid, the results shown in Table 2 were obtained.

**Table 2**

| Protein Solubility Ratios | Raw Soybean Milk | Concentration of Na₂SO₄ Added (mM) | | | |
|---|---|---|---|---|---|
| | | 0 | 10 | 30 | 100 |
| Supernatant Protein (%) | 100 | 95 | 72 | 60 | 62 |

| SDS-electrophoresis | | | | | |
|---|---|---|---|---|---|
| 7S (%) | 100 | 95 | 73 | 70 | 66 |
| | | | | | |
| 11S (%) | 100 | 90 | 75 | 59 | 74 |
| | | | | | |
| Gly m I (%) | 100 | 89 | 41 | 12 | 8 |

As seen from the results of Tables 1 and 2, when sulfuric acid is used, a 7S protein fraction having high 7S protein content from which the allergenic protein has been removed can be readily obtained at a salt concentration of 0 or not more than 10 mM. In addition, for obtaining fractionated soybean proteins in which the concentration of the allergenic protein has been reduced to about 10%, the sulfuric acid-calcium chloride system is superior to the hydrochloric acid-sodium sulfate in view of the higher yield of proteins (the amount of proteins in the supernatant) lower concentration of the salt.

### Example 2

To raw soybean milk prepared in the same manner as described in Example 1 was added calcium chloride so that its concentration was 30 mM. The mixture was dissolved with stirring, adjusted to pH 3.0 with 2N H₂SO₄ and centrifuged at 10,000 g for 10 minutes to obtain a supernatant fraction. This fraction was diluted 3 times and its pH was adjusted to 4.5 with sodium hydroxide so as to cause isoelectrical precipitation. The curds were separated by centrifugation. To the curds was added an appropriate amount of water and neutralized with sodium hydroxide, pasteurized with heating and spray-dried to prepare isolated soybean proteins. The recovery of proteins was 50% of the total proteins of the soybean milk.

### Example 3

In the same manner as described in Example 2, isolated soybean proteins were prepared except that the concentration of calcium chloride added was 10 mM. The recovery of proteins this time was 33% of the total proteins of the soybean milk.

### Comparative Example 2

In the same manner as described in Example 2, isolated soybean proteins were prepared except that the concentration of calcium chloride added was 300 mM and the supernatant fraction was diluted 100 times. The recovery of proteins this time was 70% of the total proteins of the soybean milk.

### Comparative Example 3

The raw soybean milk prepared in the same manner as described in Example 1 was adjusted to pH 4.5 with sulfuric acid without addition of any salts so as to cause isoelectric precipitation. Curds were obtained by centrifugation. An appropriate amount of water was added to the curds and the mixture was neutralized with sodium hydroxide, pasteurized with heating and spray-dried to prepare isolated soybean proteins. The recovery of proteins this time was 88% of the total proteins of the soybean milk.

As shown in Table 3, four kinds of pastes containing 17% of isolated soybean proteins obtained as above were prepared, filled into plastic casings having a folding width of 37 mm, and heated at 80°C for 30 minutes to obtain gels. Organoleptic evaluation and measurement of the breaking strength of the gels with a Rheoner (manufactured by Yamaden) were carried out. 20 Panelists carried out the organoleptic evaluation of quality by scoring with respect to three items according to the following criteria, i.e., color: from bright/10 points to dark/1 point; clearness: from clear/10 points to opaque/1 point; and flavor and taste: tasteless/10 points to bad/1 point. The results are shown in Table 3 as the averages of the scores. As seen from Table 3, in comparison with the gels prepared by using the isolated soybean proteins of Comparative Examples 2 and 3, the gels prepared by using the isolated soybean proteins of Examples 2 and 3 showed excellent results with respect to color and clearness. They also showed the strongest breaking strength and strong gel formation ability.

**Table 3**

| Isolated soybean proteins | Color | Clearness | Taste | Break strength (g x cm) |
|---|---|---|---|---|
| Example 2 | 6.2 | 6.8 | 7.3 | 754 |
| Example 3 | 8.9 | 8.7 | 8.5 | 645 |
| Comparative Example 2 | 4.7 | 4.3 | 5.6 | 550 |
| Comparative Example 3 | 4.5 | 4.0 | 5.1 | 345 |

### Example 4

In the same manner as described in Example 2, isolated soybean proteins were prepared except that acetic acid was used instead of sulfuric acid. The recovery of the proteins was 61% of the total proteins of the soybean milk and the color and taste were superior to the isolated soybean proteins of Comparative Example 3.

### Example 5

To defatted soybeans with low denaturation (1 kg) was added water (15 times) and the pH of the mixture was adjusted to 9.0 with calcium hydroxide. The mixture was stirred at room temperature for 1 hours to carry out extraction followed by removal of the "okara" component by centrifugation to obtain defatted soybean milk.

To the soybean milk was added 20mM CaCl₂ and adjusted to pH 2.8 with 2N H₂SO₄ and centrifuged at 10,000 g for 10 minutes to obtain a supernatant fraction. This fraction was diluted 3 times and its pH was adjusted to 4.5 with sodium hydroxide so as to cause isoelectrical precipitation. The curds were separated by centrifugation. To the curds was added an appropriate amount of water and neutralized with sodium hydroxide, pasteurized with heating and spray-dried to prepare isolated soybean proteins. The recovery of proteins was 60% of the total proteins of the soybean milk and the color and taste were superior to the isolated soybean proteins of Comparative Example 3.

As described hereinabove, according to the present invention, low-allergenic fractionated soybean proteins can be obtained in high yield by a simple method. The color, clearness, flavor and taste and gel strength of the fractionated soybean proteins are remarkably improved. In addition, the fractionated soybean proteins of the present invention can be used as sources of good proteins for patients allergic to soybeans to whom supply of the proteins has been difficult by elimination diets.

## Claims (Claims for the following Contracting State(s): BE, DE, FR, GB, NL)

1. A process for preparing fractionated soybean proteins which comprises treating soybean proteins with an aqueous solution at pH of not higher than 4 which contains an acid selected from the group consisting of sulphuric acid, acetic acid and citric acid and, optionally, not more than 10 mM of a chloride or hydroxide of an alkaline earth metal to form a precipitation fraction, removing the precipitation fraction containing 11S protein and allergenic protein and collecting a supernatant fraction containing 7S protein.

2. A process according to claim 1, wherein the treatment with the aqueous solution at pH of not more than 4 is the formation of the precipitation fraction from an aqueous extract of soybean proteins.

3. A process according to claim 1, wherein the treatment with the aqueous solution at pH of not more than 4 is the separation of a soluble fraction from soybean proteins precipitated with an acid.

4. A process according to any one of the preceding claims, wherein the treatment is carried out at pH 2 to 4 and the fractionated soybean protein obtained is 7S soybean protein.

5. The process according to any one of the preceding claims, wherein the soybean proteins are further treated with a reducing agent and/or under electrically reducing conditions prior to isolation of the supernatant fraction.

6. A process according to any one of the preceding claims, wherein the supernatant fraction is subjected to neutralisation, desalting, removal of whey, heat pasteurisation or drying.

7. A food containing a soybean protein component comprising the fractionalised soybean proteins obtainable by the process according to any preceding claim.

8. A food according to claim 7 which is a low-allergenic food for patients allergic to soybeans.

9. Use of a process for removing 7S protein from allergenic protein and 11S protein from soybean proteins, said process being as defined in any one of claims 1 to 6.

## Claims (Claims for the following Contracting State(s): ES, IT)

1. A process for preparing fractionated soybean proteins which comprises treating soybean proteins with an aqueous solution at pH of not more than 4 which contains an acid selected from the group consisting of sulfuric acid, acetic acid and citric acid and, optionally, not more than 200 mM of a salt or a hydroxide of an alkaline earth metal to form a precipitation fraction, removing the precipitation fraction and collecting a supernatant fraction.

2. A process according to claim 1, wherein the treatment with the aqueous solution at pH of not more than 4 is the formation of the precipitation fraction from an aqueous extract of soybean proteins.

3. A process according to claim 1, wherein the treatment with the aqueous solution at pH of not more than 4 is the separation of a soluble fraction from soybean proteins precipitated with an acid.

4. A process according to any preceding claim, wherein the treatment is carried out at pH 2 to 4, the concentration of the alkaline earth metal salt or hydroxide is 0 to 200 mM and the fractionated soybean protein obtained is 7S soybean protein.

5. A process according to any one of the claims 1 to 3, wherein the treatment is carried out at pH 2 to 4 and the concentration of alkaline earth metal salt or hydroxide is 10 to 100 mM.

6. A process according to any preceding claim, wherein the soybean proteins are further treated with a reducing agent and/or under electrically reducing conditions prior to isolation of the supernatant fraction.

7. A process according to any preceding claim, wherein the supernatant fraction is subjected to neutralisation, desalting, removal of whey, heat pasteurisation or drying.

8. A food containing a soybean protein component comprising the fractionalised soybean proteins obtainable by the process according to any preceding claim.

9. A food according to claim 8 which is a low-allergenic food for patients allergic to soybeans.

## Patentansprüche (Patentansprüche für folgende(n) Vertragsstaat(en): BE, DE, FR, GB, NL)

1. Verfahren zur Herstellung fraktionierter Sojabohnenproteine, das die Behandlung von Sojabohnenproteinen mit einer wässrigen Lösung mit einem pH-Wert von nicht mehr als 4, die eine Säure, ausgewählt aus Schwefelsäure, Essigsäure und Zitronensäure, und gegebenenfalls nicht mehr als 200 mM eines Salzes oder eines Hydroxids eines Erdalkalimetalls enthält, unter Bildung einer Ausfällungsfraktion, Entfernung der Ausfällungsfraktion, die 11S-Protein und allergenes Protein enthält, und Aufnehmen der überstehenden Fraktion, die 7S-Protein enthält, umfasst.

2. Verfahren gemäss Anspruch 1, worin die Behandlung mit der wässrigen Lösung mit einem pH-Wert von nicht mehr als 4 die Ausbildung der Ausfällungsfraktion aus einem wässrigen Extrakt von Sojabohnenproteinen darstellt.

3. Verfahren gemäss Anspruch 1, worin die Behandlung mit der wässrigen Lösung mit einem pH-Wert von nicht mehr als 4 die Abtrennung einer löslichen Fraktion aus Sojabohnenproteinen, die mit einer Säure ausgefällt wurden, darstellt.

4. Verfahren gemäss mindestens einem der vorhergehenden Ansprüche, worin die Behandlung bei einem pH-Wert von 2 bis 4 durchgeführt wird, und das erhaltene fraktionierte Sojabohnenprotein 7S-Sojabohnenprotein ist.

5. Verfahren gemäss mindestens einem der vorhergehenden Ansprüche, worin die Sojabohnenproteine ferner mit einem Reduktionsmittel und/oder unter elektrisch reduzierenden Bedingungen behandelt werden, bevor die überstehende Fraktion isoliert wird.

6. Verfahren gemäss mindestens einem der vorhergehenden Ansprüche, worin die überstehende Fraktion einer Neutralisierung, Entsalzung, Entfernung von Molke, Wärmepasteurisierung oder Trocknung unterworfen wird.

7. Nahrungsmittel, das eine Sojabohnenproteinkomponente enthält, die die fraktionierten Sojabohnenproteine umfasst, die nach mindestens einem der vorhergehenden Ansprüche erhältlich sind.

8. Nahrungsmittel gemäss Anspruch 7, das ein niederallergenes Nahrungsmittel für Patienten, die gegen Sojabohnen allergisch sind, darstellt.

9. Verwendung eines Verfahrens zur Entfernung von 75-Protein aus allergenem Protein und 11S-Protein aus Sojabohnenproteinen, das wie in mindestens einem der Ansprüche 1 bis 6 definiert ist.

## Patentansprüche (Patentansprüche für folgende(n) Vertragsstaat(en): ES, IT)

1. Verfahren zur Herstellung fraktionierter Sojabohnenproteine, das die Behandlung von Sojabohnenproteinen mit einer wässrigen Lösung mit einem pH-Wert von nicht mehr als 4, die eine Säure, ausgewählt aus Schwefelsäure, Essigsäure und Zitronensäure, und gegebenenfalls nicht mehr als 200 mM eines Salzes oder eines Hydroxids eines Erdalkalimetalls enthält, unter Bildung einer Ausfällungsfraktion, Entfernung der Ausfällungsfraktion und Aufnehmen der überstehenden Fraktion umfasst.

2. Verfahren gemäss Anspruch 1, worin die Behandlung mit der wässrigen Lösung mit einem pH-Wert von nicht mehr als 4 die Ausbildung der Ausfällungsfraktion aus einem wässrigen Extrakt von Sojabohnenproteinen darstellt.

3. Verfahren gemäss Anspruch 1, worin die Behandlung mit der wässrigen Lösung mit einem pH-Wert von nicht mehr als 4 die Abtrennung einer löslichen Fraktion aus Sojabohnenproteinen, die mit einer Säure ausgefällt wurden, darstellt.

4. Verfahren gemäss mindestens einem der vorhergehenden Ansprüche, worin die Behandlung bei einem pH-Wert von 2 bis 4 durchgeführt wird, die Konzentration des Erdalkalimetallsalzes oder -hydroxids beträgt 0-200 mM und das erhaltene fraktionierte Sojabohnenprotein ist 7S-Sojabohnenprotein.

5. Verfahren gemäss mindestens einem der Ansprüche 1 bis 3, worin die Behandlung bei einem pH-Wert von 2-4 durchgeführt wird, und die Konzentration des Erdalkalimetallsalzes oder -hydroxids ist 10-100 mM.

6. Verfahren gemäss mindestens einem der vorhergehenden Ansprüche, worin die Sojabohnenproteine ferner mit einem Reduktionsmittel und/oder unter elektrisch reduzierenden Bedingungen behandelt werden, bevor die überstehende Fraktion isoliert wird.

7. Verfahren gemäss mindestens einem der vorhergehenden Ansprüche, worin die überstehende Fraktion einer Neutralisierung, Entsalzung, Entfernung von Molke, Wärmepasteurisierung oder Trocknung unterworfen wird.

8. Nahrungsmittel, das eine Sojabohnenproteinkomponente enthält, die die fraktionierten Sojabohnenproteine umfasst, die nach mindestens einem der vorhergehenden Ansprüche erhältlich sind.

9. Nahrungsmittel gemäss Anspruch 8, das ein niederallergenes Nahrungsmittel für Patienten, die gegen Sojabohnen allergisch sind, darstellt.

## Revendications (Revendications pour l'(les) Etat(s) contractant(s) suivant(s): BE, DE, FR, GB, NL)

1. Procédé pour la fabrication de protéines de soja fractionnées qui consiste à traiter des protéines de soja à l'aide d'une solution aqueuse à un pH inférieur ou égal à 4, qui contient un acide choisi au sein du groupe constitué de l'acide sulfurique, de l'acide acétique et de l'acide citrique et, facultativement, d'une quantité inférieure ou égale à 10 mM d'un chlorure ou d'un hydroxyde d'un métal alcalino-terreux afin de former une fraction de précipitation, à éliminer la fraction de précipitation contenant la protéine 11S et la protéine allergène et à recueillir une fraction surnageante contenant la protéine 7S.

2. Procédé selon la revendication 1, dans lequel le traitement avec la solution aqueuse à un pH inférieur ou égal à 4 est la formation de la fraction de précipitation à partir d'un extrait aqueux de protéines de soja.

3. Procédé selon la revendication 1, dans lequel le traitement avec la solution aqueuse à un pH inférieur ou égal à 4 est la séparation d'une fraction soluble à partir de protéines de soja précipitées au moyen d'un acide.

4. Procédé selon l'une quelconque des revendications précédentes, dans lequel le traitement est conduit à un pH de 2 à 4 et la protéine de soja fractionnée obtenue est la protéine de soja 7S.

5. Procédé selon l'une quelconque des revendications précédentes, dans lequel les protéines de soja sont traitées de manière supplémentaire à l'aide d'un agent réducteur et/ou dans des conditions électriquement réductrices avant l'isolement de la fraction surnageante.

6. Procédé selon l'une quelconque des revendications précédentes, dans lequel la fraction surnageante est soumise à une neutralisation, un dessalage, une élimination du lactosérum, une pasteurisation ou un séchage par la chaleur.

7. Aliment contenant un composant à base de protéines de soja comprenant les protéines de soja fractionnalisées pouvant être obtenues suivant le procédé selon l'une quelconque des revendications précédentes.

8. Aliment selon la revendication 7, qui est un aliment hypo-allergénique pour les patients allergiques au soja.

9. Utilisation d'un procédé d'élimination de la protéine 7S de la protéine allergène et de la protéine 11S des protéines de soja, ledit procédé étant tel que défini dans l'une quelconque des revendications 1 à 6.

## Revendications (Revendications pour l'(les) Etat(s) contractant(s) suivant(s): ES, IT)

1. Procédé pour la fabrication de protéines de soja fractionnées qui consiste à traiter des protéines de soja à l'aide d'une solution aqueuse à un pH inférieur ou égal à 4, qui contient un acide choisi au sein du groupe constitué de l'acide sulfurique, de l'acide acétique et de l'acide citrique et, facultativement, d'une quantité inférieure ou égale à 200 mM d'un sel ou d'un hydroxyde d'un métal alcalino-terreux afin de former une fraction de précipitation, à éliminer la fraction de précipitation et à recueillir une fraction surnageante.

2. Procédé selon la revendication 1, dans lequel le traitement à l'aide de la solution aqueuse à un pH inférieur ou égal à 4 est la formation de la fraction de précipitation à partir d'un extrait aqueux de protéines de soja.

3. Procédé selon la revendication 1, dans lequel le traitement avec la solution aqueuse à un pH inférieur ou égal à 4 est la séparation d'une fraction soluble de protéines de soja précipitées à l'aide d'un acide.

4. Procédé selon l'une quelconque des revendications précédentes, dans lequel le traitement est conduit à un pH de 2 à 4, la concentration du sel de métal alcalino-terreux ou de l'hydroxyde est de 0 à 200 mM et la protéine de soja fractionnée obtenue est une protéine de soja 7S.

5. Procédé selon l'une quelconque des revendications 1 à 3, dans lequel le traitement est conduit à un pH de 2 à 4 et la concentration du sel de métal alcalino-terreux ou de l'hydroxyde est de 10 à 100 mM.

6. Procédé selon l'une quelconque des revendications précédentes, dans lequel les protéines de soja sont traitées de manière supplémentaire avec un agent réducteur et/ou dans des conditions électriquement réductrices avant l'isolement de la fraction surnageante.

7. Procédé selon l'une quelconque des revendications précédentes, dans lequel la fraction surnageante est soumise à une neutralisation, un dessalage, une élimination du lactosérum, une pasteurisation ou un séchage par la chaleur.

8. Aliment contenant un composant à base de protéines de soja comprenant les protéines de soja fractionnalisées pouvant être obtenues suivant le procédé selon l'une quelconque des revendications précédentes.

9. Aliment selon la revendication 8, qui est un aliment hypo-allergénique pour des patients allergiques au soja.
